# EUROPÄISCHE PATENTSCHRIFT

(11) **EP 1 576 715 B1**
(45) Veröffentlichungstag und Bekanntmachung des Hinweises auf die Patenterteilung: **30.09.2009**
(21) Anmeldenummer: 03788863.3
(22) Anmeldetag: 08.12.2003
(51) Int. Cl.: H02K 17/16, H02K 3/14, H02K 3/28

(54) **ELEKTRISCHE MASCHINE**
ELECTRICAL MACHINE
MACHINE ELECTRIQUE

(30) Priorität: 20.12.2002 DE 10260282
(43) Veröffentlichungstag der Anmeldung: 21.09.2005
(73) Patentinhaber: SIEMENS AKTIENGESELLSCHAFT, 80333 München (DE)
(72) Erfinder: DRESSEL, Gerhard, 90592 Schwarzenbruck (DE)
(86) Internationale Anmeldenummer: PCT/DE2003/004037
(87) Internationale Veröffentlichungsnummer: WO 2004/057735

(56) Entgegenhaltungen:
- DE-A- 2 532 338
- DE-B- 1 150 752
- US-A- 1 645 296
- US-A- 2 971 106
- US-A- 5 530 310
- PATENT ABSTRACTS OF JAPAN vol. 1996, no. 05, 31. Mai 1996 (1996-05-31) -& JP 08 009606 A (HITACHI LTD), 12. Januar 1996 (1996-01-12)
- PATENT ABSTRACTS OF JAPAN vol. 006, no. 251 (E-147), 10. Dezember 1982 (1982-12-10) -& JP 57 148563 A (HITACHI SEISAKUSHO KK), 13. September 1982 (1982-09-13)

## Beschreibung

Die Erfindung betrifft eine elektrische Maschine mit einem Kurzschlussläufer.

Asynchronmaschinen besitzen unter anderem als Läufer eine Kurzschlusswicklung, wobei in den Nuten jeweils ein Stab liegt, und die Stäbe an den Stirnseiten des Läufers durch Ringe kurzgeschlossen werden. Stäbe und Kurzschlussringe werden aus Aluminium oder Aluminiumlegierungen im Druckgussverfahren hergestellt, die einen höheren Widerstand besitzen. Es sind aber auch Kupfer, Bronze und Messing als elektrische Leiter einsetzbar. Die massiven Stäbe der Kurzschlusswicklung werden im allgemeinen blank in den Läufer eingesetzt und mit den Kurzschlussringen jeweils verlötet.

Nachteilig dabei ist, dass die Kurzschlussstäbe durch einen separaten Fertigungsschritt mit ihren Kurzschlussringen verbunden werden müssen, und dass die Ausladung der Stäbe an den Stirnseiten des Läufers nicht zur Drehmomentbildung beiträgt. Des Weiteren treten durch die verhältnismäßig starre Konstruktion des Kurzschlusskäfigs, insbesondere an den Lötstellen, Schwingungsbrüche auf.

Aus der JP 08 009 606 ist eine elektrische Maschine mit einem Kurzschlussläufer mit verwundenen Litzenleitern bekannt.

Aus der US 5 530 310 ist ein Kurzschlusskäfig mit gekröpften Leitern bekannt, die zu einem Kurzschlussring zusammengefasst sind.

Demzufolge liegt der Erfindung die Aufgabe zugrunde, einen Kurzschlusskäfig einer elektrischen Maschine zu schaffen, der die oben genannten Nachteile verhindert.

Die Lösung der gestellten Aufgabe gelingt dadurch, dass die flexiblen Leiter Litzenleiter sind, wobei die Litzenleiter mäanderförmig und gegenläufig in den Nuten des Kurzschlussläufers angeordnet sind, wobei sich in einer Nut des Kurzschlussläufers zwei gegenläufige Leiter befinden um dadurch die Kurzschlussverbindung bereits in der Nut herzustellen

Damit werden Schwingungsbrüche vermieden und die Ausladung über das Blechpaket des Kurzschlussläufers verkürzt. Die notwendige Kurzschlussverbindung wird dabei vorteilhafterweise innerhalb der Nuten geschaffen, indem insbesondere zwei gegenläufig in einer Nut platzierte elektrische Leiter insbesondere Litzenleiter elektrisch kontaktiert sind. Diese elektrische Kontaktierung erfolgt beispielweise durch Pressvorgänge.

Die Nuten können geschlossen, halboffen oder offen sein. Insbesondere bei offenen Nuten sind zumindest abschnittsweise Vorkehrungen zu treffen, um die Fliehkräfte der flexiblen Leiter im Nutbereich aufzunehmen.

Insbesondere durch Ausbildung der elektrischen Leiter als Litzen, mit einer Vielzahl von Filamenten, die verseilt oder verwürgt gegeneinander blanke Einzeldrähte enthält, wird der Stromverdrängungseffekt reduziert. Die Querschnittsform der Litze als auch ihrer Filamente kann dabei sämtliche geometrischen Formen annehmen wie z.B. viereckig, rechteckförmig, quadratisch, dreieckförmig oder rundlich.

Die Querschnittsformen über die Länge einer Litze oder eines Filaments sind dabei auch durch geeignete Verfahren unterschiedlich ausformbar.

An den Stirnseiten des Kurzschlussläufers werden durch die erfindungsgemäße Ausgestaltung die Ausladungen der mäanderförmig eingesetzten Leiter verhältnismäßig kurz. Aufgrund der Flexibilität der elektrischen Leiter insbesondere der Litzenleiter sind zur Aufnahme der Fliehkräfte im Betrieb der elektrischen Maschine in einer besonderen Ausführungsform Halteelemente vorzusehen. Diese Halteelemente sind aus elektrisch isolierendem Material hoher Festigkeit, um die Fliehkräfte der Litzenleiter außerhalb des Blechpakets aufzunehmen. Die Halteelemente sind dabei als einfacher Ring, als auch als kappenähnliches, rinnenförmiges Teil ausgeführt, die die Ausladungen zumindest teilweise umgeben. An dem Halteelement sind vorteilhafterweise zusätzliche Lüfterflügel vorgesehen, die entweder separat am Haltelement befestigbar sind oder bereits während des Fertigungsprozesses z.B. mit angegossen werden.

Die Erfindung sowie weitere vorteilhafte Ausgestaltungen der Erfindung ist dem schematisch dargestellten Ausführungsbeispiel zu entnehmen. Darin zeigt:
- FIG 1: eine prinzipielle erfindungsgemäße Kurzschlussläuferwicklung,
- FIG 2: einen Abschnitt des Halterings.

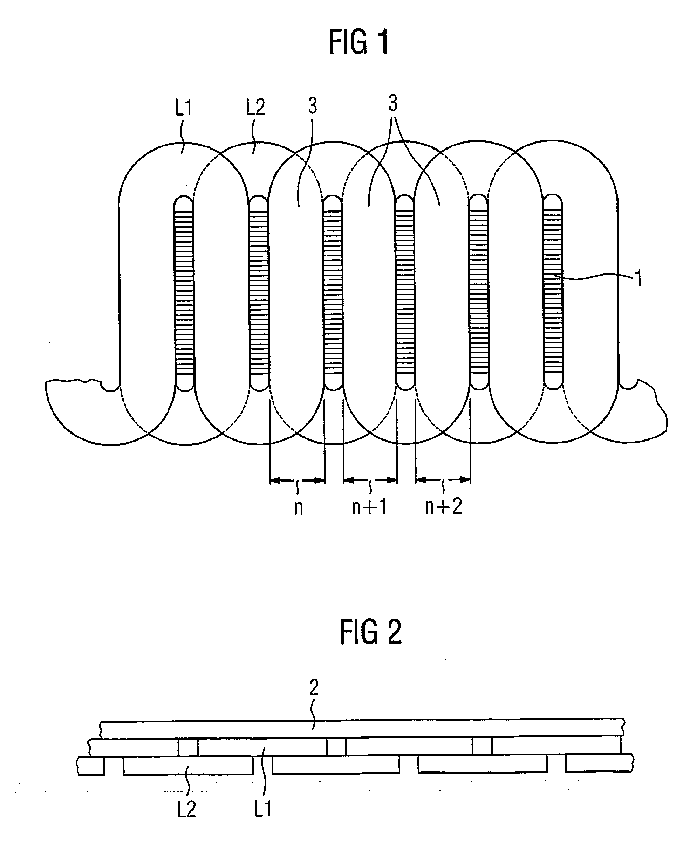

FIG 1 zeigt in abgewickelter Form einen Kurzschlussläufer mit einem Blechpaket 1, mit einigen beispielsweise dargestellten Nuten n, n+1 und n+2, die in dem Blechpaket 1 herausgehoben wurden. In diesen Nuten liegt ein Leiter L2 in einer Unterschicht und windet sich gegenüber einem Leiter L1 in Oberschicht gegenläufig mäanderförmig durch diese Nuten. Die Leiter L1 und L2 sind vorzugsweise Litzenleiter, die aus einzelnen Filamenten bestehen. Dabei sind die Litzenleiter insbesondere mit einer vorgebbaren Schlagweite verdrillt.

Eine elektrische Kontaktierung der Leiter L1 und L2 wird vorzugsweise durch einen Pressvorgang der vorteilhafterweise blanken Litzenleiter in den Nuten n, n+1, n+2 erreicht. Dabei bilden die Nutwandungen den erforderlichen Gegendruck aus. Es sind auch andere elektrische Kontaktierungen möglich, insbesondere durch eine leitfähige Vergussmasse, die z.B. im Anschluss an die Montage der Leiter in die Nuten oder gewisse vorgebbare axiale Nutbereiche eingefüllt wird. Dies dient gleichzeitig der Fixierung der Litzenleiter in der Nut.

Eine Kontaktierung kann ebenso durch Anschmelzen der Litzenleiter in diesen Bereichen erfolgen.

Eine mechanische Kontaktierung ist in einer weiteren Ausführungsform durch mechanisch leitfähige Elemente gegeben, die in diese Bereiche z.B. eingeschlagen werden.

In einer anderen Ausführungsform sind die in einer Nut n, n+1, n+2 vorhandenen Litzenleiter durch eine Quetschverbindung zumindest abschnittsweise kontaktiert. Dabei werden die Litzenleiter miteinander verquetscht oder es wird zumindest in den zu verquetschenden Bereichen eine die Litzenleiter umgebende leitfähige Umhüllung mitverquetscht.

Insbesondere bei halboffenen oder geschlossenen Nuten n, n+1, n+2 ist es vorteilhaft, die oben angesprochenen Kontaktierungen in den Bereichen 3, d.h. unmittelbar nach dem Austritt der Leiter L1 und L2 aus dem Blechpaket 1 vorzunehmen

Durch die erfindungsgemäße Ausgestaltung des Kurzschlusskäfigs erübrigt sich der bisher übliche Kurzschlussring. Dementsprechend sind auch die damit verbundenen Montageschritte eingespart und Schwingungsbrüche sind ausgeschlossen. Eine Kurzschlussverbindung wird durch eine elektrisch leitfähige Verbindung von L1 und L2 erreicht. L1 und L2 sind auch abwechselnd in Ober- und Unterschicht anordenbar, genauso wie die Leiter L1 und L2 nebeneinander in einer Nut anzuordnen sind. Die gesamte Kurzschlussläuferwicklung kann aber auch aus mehr als zwei Litzenleitern aufgebaut sein, damit können sich dementsprechend mehr Litzenleiter in einer Nut n, n+1, n+2 befinden.

FIG 2 zeigt einen Abschnitt der Stirnseite des Blechpakets 1. Die Leiter L1 und L2 werden jeweils durch ein Halteelement, das vorzugsweise als Haltering 2 ausgeführt ist, gegenüber Fliehkräften des nunmehr aus Litzenleiter bestehender Ausladungen der Kurzschlusswicklung abgestützt. Der Haltering 2 ist insbesondere aus einem elektrisch isolierenden Material, das u.a. Fliehkräfte aufnehmen kann. Eine elektrische Kontaktierung kann ergänzend auch außerhalb des Blechpakets 1 im Bereich des Halterings 2 durch abschnittsweise Press- oder Quetschverbindungen erfolgen.

Mechanisch sind die Litzenleiter aneinander und/oder an dem Halteelement 2 durch Klebeverbindungen und/oder Festzurrelementen fixiert.

In einer weiteren Ausgestaltung sind die Litzenleiter außerhalb des Blechpakets 1 nicht mehr parallel verlegt. Jeder Litzenleiter kann damit auf seinem kürzesten Wege in die nächste vorgesehene Nut gelegt werden, was nicht unbedingt die benachbarte Nut sein muss.

## Patentansprüche

1. Elektrische Maschine mit einem Kurzschlussläufer, wobei der Kurzschlussläufer eine Kurzschlusswicklung aus flexiblen Leitern aufweist, wobei die flexiblen Leiter (L1, L2) Litzenleiter sind, **dadurch gekennzeichnet, dass** die Litzenleiter mäanderförmig und gegenläufig in den Nuten (n,n+1,n+2) des Kurzschlussläufers angeordnet sind, wobei sich in einer Nut des Kurzschlussläufers zwei gegenläufige Leiter befinden um dadurch die Kurzschlussverbindung bereits in der Nut herzustellen.

2. Elektrische Maschine nach Anspruch 1, **dadurch gekennzeichnet , dass** die Litzenleiter insbesondere mit einer vorgebbaren Schlagweite verdrillt sind.

3. Elektrische Maschine nach Anspruch 1 oder 2, **dadurch gekennzeichnet, dass** die Querschnittsform der Litzen als auch ihrer Filamente unterschiedlich ausformbar sind, so dass die Litzen und/oder die Filamente unterschiedliche Querschnittsformen aufweisen.

4. Elektrische Maschine nach einem der Ansprüche 1 oder 2, **dadurch gekennzeichnet, dass** die Querschnittsformen über die Länge einer Litze oder eines Filaments unterschiedlich ausformbar sind.

5. Elektrische Maschine nach einem der vorhergehenden Ansprüche, **dadurch gekennzeichnet, dass** die Kurzschlussläuferwicklung aus mehr als zwei Litzenleitern aufgebaut ist.

6. Elektrische Maschine nach Anspruch 5, **dadurch gekennzeichnet, dass** die Leiter abwechselnd in Ober- und Unterschicht anordenbar sind.

7. Elektrische Maschine nach einem der vorhergehenden Ansprüche, **dadurch gekennzeichnet, dass** die Litzenleiter innerhalb einer Nut (n,n+1,n+2) elektrisch kontaktiert sind.

8. Elektrische Maschine nach einem der vorhergehenden Ansprüche, **dadurch gekennzeichnet, dass** Halteelement vorgesehen sind.

9. Elektrische Maschine nach Anspruch 8, **dadurch gekennzeichnet, dass** das Halteelement aus elektrisch isolierendem Material hoher Festigkeit besteht.

10. Elektrische Maschine nach Anspruch 8 oder 9, **dadurch gekennzeichnet, dass** das Halteelement als ring- oder als kappenähnliches rinnenförmiges Teil ausgeführt ist.

11. Elektrische Maschine nach einem der Ansprüche 8 bis 10, **dadurch gekennzeichnet, dass** an dem Halteelement Lüfterflügel vorgesehen sind.

12. Elektrische Maschine nach einem der vorhergehenden Ansprüche, **dadurch gekennzeichnet, dass** eine elektrische Kontaktierung der Litzenleiter durch Pressung in der Nut erfolgt.

13. Elektrische Maschine nach Anspruch 12, **dadurch gekennzeichnet, dass** eine elektrische Kontaktierung zumindest in Abschnitt erfolgt.

14. Elektrische Maschine nach Anspruch 12 oder 13, **dadurch gekennzeichnet, dass** eine Kontaktierung durch leitfähige Elemente vorgesehen ist, die eingeschlagen werden.

15. Elektrische Maschine nach Anspruch 13, **dadurch gekennzeichnet, dass** eine Kontaktierung durch eine leitfähige Vergussmasse erfolgt.

16. Elektrische Maschine nach einem der Ansprüche 12 bis 15, **dadurch gekennzeichnet , dass** eine elektrische Kontaktierung unmittelbar nach dem Austritt der Leiter (L1,L2) aus dem Blechpaket (1) erfolgt.

17. Elektrische Maschine nach einem der vorhergehenden Ansprüche, **dadurch gekennzeichnet, dass** der Abstand jedes Mäanders eines Litzenleiters mindestens dem Nutabstand entspricht.

## Claims

1. Electric machine, comprising a squirrel-cage rotor having a cage winding made of flexible conductors, wherein the flexible conductors (L1, L2) are stranded wires, **characterised in that** the stranded wires are arranged in a meandering pattern, running in opposite directions, in slots (n, n+1, n+2) of the squirrel-cage rotor, wherein two opposing conductors are positioned in a slot of the squirrel-cage rotor so as to establish a squirrel-cage connection in the rotor.

2. Electric machine according to claim 1, **characterised in that** the stranded wires are twisted in particular with a predeterminable pitch.

3. Electric machine according to claim 1 or 2, **characterised in that** the cross sectional configuration of the wires and also their filaments can be formed differently so that the wires and/or the filaments have different cross sectional configurations.

4. Electric machine according to one of claims 1 or 2, **characterised in that** the cross sectional configurations over the length of a wire or a filament can be formed differently.

5. Electric machine according to one of the preceding claims, **characterised in that** the squirrel-cage rotor winding includes more than two stranded wires.

6. Electric machine according to claim 5, **characterised in that** the wires can be arranged in an alternating pattern in an upper layer and lower layer.

7. Electric machine according to one of the preceding claims, **characterised in that** the stranded wires in a slot (n, n+1, n+2) are in electric contact.

8. Electric machine according to one of the preceding claims, **characterised in that** holding elements are provided.

9. Electric machine according to claim 8, **characterised in that** the holding element is made of an electrically insulating material of high strength.

10. Electric machine according to claim 8 or 9, **characterised in that** the holding element has a ring-shaped or cap-like channel-shaped configuration.

11. Electric machine according to one of claims 8 to 10, **characterised in that** fan blades are provided on the holding element.

12. Electric machine according to one of the preceding claims, **characterised in that** the stranded wires are in electric contact through pressing in the slot.

13. Electrical machine according to claim 12, **characterised in that** the electric contact is realised at least in a section.

14. Electric machine according to claim 12 or 13, **characterised in that** a contacting by means of conductive elements which are driven into the section is provided.

15. Electric machine according to claim 13, **characterised in that** the contacting is realised by a conductive potting compound.

16. Electric machine according to one of claims 12 to 15, **characterised in that** the electric contacting is realised immediately after the wires (L1, L2) exit the laminated core (1).

17. Electric machine according to one of the preceding claims, **characterised in that** the distance between each meander of a stranded wire corresponds at least to the slot distance.

## Revendications

1. Machine électrique ayant un rotor en court-circuit, le rotor en court-circuit ayant un enroulement de court-circuit en conducteurs souples, dans lequel les conducteurs ( L1, L2 ) souples sont des conducteurs torsadés, **caractérisée en ce que** les conducteurs torsadés sont disposés sinueusement et en sens opposé dans les rainures ( n, n+1, n+2 ) du rotor en court-circuit, deux conducteurs en sens opposé se trouvant dans une rainure du rotor en court-circuit pour ménager ainsi la liaison de court-circuit déjà dans la rainure.

2. Machine électrique suivant la revendication 1, **caractérisée en ce que** les conducteurs torsadés sont torsadés en ayant notamment une distance d'isolation pouvant être prescrite.

3. Machine électrique suivant la revendication 1 ou 2, **caractérisée en ce que** la forme de la section droite des conducteurs torsadés, ainsi que celle de leurs filaments peuvent être formés différemment de sorte que les conducteurs tressés et/ou les filaments ont des formes de section transversale différentes.

4. Machine électrique suivant l'une des revendications 1 ou 2, **caractérisée en ce que** les formes de section transversale peuvent être formées différemment sur la longueur d'un conducteur tressé ou d'un filament.

5. Machine électrique, suivant l'une des revendications précédentes, **caractérisée en ce que** l'enroulement du rotor en court-circuit est formé de plus de deux conducteurs tressés.

6. Machine électrique, suivant la revendication 5, **caractérisée en ce que** les conducteurs peuvent être disposés en alternance en couche supérieure et en couche inférieure.

7. Machine électrique, suivant l'une des revendications précédentes, **caractérisée en ce que** les conducteurs tressés peuvent être mis en contact électriquement à l'intérieur d'une rainure ( n, n+1, n+2 ).

8. Machine électrique, suivant l'une des revendications précédentes, **caractérisée en ce que** des éléments de maintien sont prévus.

9. Machine électrique, suivant la revendication 8, **caractérisée en ce que** l'élément de maintien est en un matériau isolant électriquement d'une grande résistance.

10. Machine électrique, suivant la revendication 8 ou 9, **caractérisée en ce que** l'élément de maintien est réalisé sous la forme d'une pièce annulaire ou en forme de nervure analogue à un capuchon.

11. Machine électrique, suivant l'une des revendications 8 à 10, **caractérisée en ce que** des ailettes de ventilateur sont prévues sur l'élément de maintien.

12. Machine électrique, suivant l'une des revendications précédentes, **caractérisée en ce qu'**une mise en contact électrique des conducteurs tressés s'effectue par pression dans la rainure.

13. Machine électrique, suivant la revendication 12, **caractérisée en ce que** une mise en contact électrique s'effectue au moins dans un tronçon.

14. Machine électrique, suivant la revendication 12 ou 13, **caractérisée en ce qu'**il est prévu une mise en contact par des éléments conducteurs qui sont enfoncés.

15. Machine électrique, suivant la revendication 13, **caractérisée en ce qu'**une mise en contact s'effectue par une composition de scellement conductrice.

16. Machine électrique, suivant l'une des revendications 12 à 15, **caractérisée en ce qu'**une mise en contact électrique s'effectue directement après que le conducteur ( L1, L2 ) est sorti du paquet ( 1 ) de tôle.

17. Machine électrique, suivant l'une des revendications précédentes, **caractérisée en ce que** la distance entre chaque sinuosité d'un conducteur tressé correspondant au moins à la distance entre les rainures.
